# EUROPEAN PATENT SPECIFICATION

(11) **EP 3 453 359 B1**
(45) Date of publication and mention of the grant of the patent: **21.04.2021**
(21) Application number: 17792302.6
(22) Date of filing: 28.04.2017
(51) Int. Cl.: A61C 8/00

(54) **PROSTHETIC ASSEMBLY AND METHOD FOR PRODUCING SAME**
PROTHESENANORDNUNG UND VERFAHREN ZUR HERSTELLUNG DAVON
ENSEMBLE PROTHÉTIQUE ET SON PROCÉDÉ DE PRODUCTION

(30) Priority: 05.05.2016 BR 102016101840
(43) Date of publication of application: 13.03.2019
(73) Proprietor: JJGC Indústria E Comércio De Materiais Dentários S.A., 81270-200 Curitiba (BR)
(72) Inventor: THOMÉ, Geninho, 80420-170 Curitiba - PR (BR); MERTIN, Felix Andreas, Curitiba - Paraná (BR); PEREIRA DA SILVA, Ivanio, 81860-020 Curitiba - PR (BR); CALIXTO SALATTI, Rafael, 81630-230 Curitiba - PR (BR)
(74) Representative: Elzaburu S.L.P.
(86) International application number: PCT/BR2017/050101
(87) International publication number: WO 2017/190207

(56) References cited:
- WO-A1-98/52488
- WO-A1-2009/127880
- BR-U2- MU8 800 606
- US-A- 5 116 225
- US-A- 5 695 335
- US-A1- 2004 101 808
- US-A1- 2007 072 148
- US-A1- 2010 248 181
- US-A1- 2010 248 181
- US-B2- 7 300 283
- US-B2- 7 300 283

## Description

### FIELD OF THE INVENTION

The invention belongs to the field of prosthetic restoration for use in the human body and is related, in particular, to a prosthetic assembly designed to aid in removal of a prosthesis after used by a subject, as well as a process for production thereof.

### BACKGROUND OF THE INVENTION

Prosthetic restorations for dental and orthopedic use are widely known in the state of the art, and are comprised of different components attached to each other, these components are usually joined together by a retention screw and/or a fitting geometry that stops relative motion between the parts.

For instance, in an implant-supported dental restoration, one or more implants may be inserted into a subject's jaw, so that it can receive structural elements in the form of prosthetics abutments, preceding aesthetic elements as crowns or bridges. In this configuration, the implant is attached to the bone by its geometry as well as adhesion or "osseointegration" of the implant surface to the bone. The structural element is then mounted on the implant and attached by the retention screw.

During treatment or periodic maintenance, it may be necessary to remove or "pop out" the structural element of the implant, which would require that the dental health practitioner exerts force to remove the element. However, due to the effects of cyclic compression on the components, caused by chewing, these can adhere to each other, making it harder for them to be removed, thus causing discomfort or even injury to the subject.

The issue of torque increase in removal of prosthesis abutment screw after mechanical cycling is extensively known in the state of the art. Decreasing the installation torque on the screw is not an option, as it is known that mechanical stability of the implant-connection assembly is required for the implant restoration to be successful. The remaining issue regards increasing the removal torque of prosthetic components, especially those including Morse cone, which can lead to fracture of the tool in use, or fracture of the component, if employed excessively.

Current state of the art only includes systems for locking prosthetic elements comprising different combinations of retention screws and fitting geometry. However, geometries that might make removal of the prosthetic element easier by exerting a force in the pop-out direction of the component are not known.

By way of example, US 6.663.388 discloses an interconnection between a known dental implant and a prosthetic element (i.e. a straight or angular connection). Said interconnection is attached to the implant by means of a screw and support ring, only receiving the prosthetic component as a secondary element, which is attached to the interconnection by means of a second screw. It can be verified that the support ring containing the interconnection screw is attached to the lower part of the interconnection, subsequent to insertion of the screw through the lower part of the interconnection as well. However, the described ring does not make the removal process of the prosthetic component any easier, as it is fixed by the second screw of the assembly, which has to be removed prior to removal of the prosthetic element, as in the prior art.

US 4.927.363 discloses a compression ring seated upon the shoulder of a prosthetic component, between a threaded portion and a centering pin of the screw. Such ring works to improve the seal between the components, but also fails to aid in removal of the prosthetic component that has been subjected to torque from repeated operation cycles. Other examples of screws comprising rings can be found, such as in US 5.100.323 and US 8.888.486, which solve different issues, but are not effective in aiding the removal of the prosthetic component that is sealed against the body of the implant after repeated cycles

WO2009/127880A1 discloses a prosthetic assembly, comprising a prosthetic component and a retention screw. The prosthetic component includes an integral locking ring adapted to engage with an implant screw; and a process for producing said prosthetic assembly.

The present invention discloses a solution for the issues of prosthetic component shearing, increasing of removal torque due to cycling, tools breaking, and jamming of temporary posts and abutments. The invention defines a prosthetic assembly which can be of different types, such as posts, mini abutments and connectors of the UCLA type after cementing, designed to aid in removal of the prosthetic element, whenever necessary.

### SUMMARY

The present invention defines a prosthetic assembly according to claim 1 and a process for producing such prosthetic assembly according to claim 9. Preferred embodiments of the invention are defined in the dependent claims.

The interference geometry may be in the form of a ring attached to the retention screw in a portion of the body of the screw having a smaller diameter, or in the form of one or more inwardly folded flaps, integrated to the prosthetic component and diametrically distributed around the base thereof, or in the form of a uniform, tapered and hollow projection of the lower portion of the prosthetic element.

The prosthetic component may be of various types, including: connection, straight abutment, angled abutment, mini conical abutment, UCLAs, analogues, "transfers", straight post and angled post. It also comprises a lower portion, of any form, but preferably in the form of a Morse cone (also known in the art as 'Morse taper'), as well as an anti-rotation geometry, of any form, but preferably in the form of a hexagonal or octagonal prism.

The invention further defines a process for the production of the prosthetic component presented herein according to claim 9.

The processes for production of the prosthetic assemblies according to the preferred embodiments of the invention differ as to the manner of forming the interference element. Wherein: in the first preferred embodiment, the step of forming an interference geometry comprises attaching a ring to the portion of the body of the screw having a smaller diameter; in the second preferred embodiment, the step of forming an interference geometry comprises inwardly folding one or more integrated flaps to, and distributed in the prosthetic element base, said one or more flaps inwardly folded into, and so as to cooperate with, the portion of the body of the retention screw having a smaller diameter; and, in the third preferred embodiment, the step of forming an interference geometry comprises inwardly folding a hollow projection of the prosthetic element lower portion, forming thereby a tapered element which cooperates with the portion of the retention screw having a smaller diameter.

### BRIEF DESCRIPTION OF THE DRAWINGS

The invention will now be described in reference to the accompanying figures, by way of non-limiting example, wherein:
Figure 1A is a side view of a first embodiment of the prosthetic assembly which is the object of the present invention;
Figure 1B is a perspective view of the prosthetic component that integrates the prosthetic assembly of the first embodiment of the invention;
Figure 1C is a perspective view of the prosthetic assembly shown in Figure 1A; and
Figure 1D is a cross-sectional view of the lower portion of Figure 1A from line DD', showing the internal assembly of the first embodiment of the prosthetic assembly which is the object of the present invention;
Figure 2A, in turn, is a side view of a second embodiment of the prosthetic assembly which is the object of the present invention;
Figure 2B is a perspective view of the prosthetic component that integrates the prosthetic assembly of the second embodiment of the invention;
Figure 2C is a perspective view of the prosthetic assembly shown in Figure 2A; and
Figure 2D is a cross-sectional view of the lower portion of Figure 2A from line DD', showing the internal assembly of the second embodiment of the prosthetic assembly which is the object of the present invention;
Figure 3A is a side view of a third embodiment of the prosthetic assembly which is the object of the present invention;
Figure 3B is a perspective view of the prosthetic component that integrates the prosthetic assembly of the third embodiment of the invention;
Figure 3C is a perspective view of the prosthetic assembly shown in Figure 3A; and
Figure 3D is a cross-sectional view of the lower portion of Figure 3A from line DD', showing the internal assembly of the third embodiment of the prosthetic assembly object of the present invention;
Further, Figures 4A, 4B and 4C illustrate the gradual motion of the prosthetic assembly of the first embodiment, relative to a dental implant to which it has been attached, when the retention screw is driven in the direction of arrow D;
Similarly, Figures 5A, 5B and 5C illustrate the gradual motion of the prosthetic assembly of the second embodiment, relative to a dental implant to which it has been attached, when the retention screw is driven in the direction of arrow D;

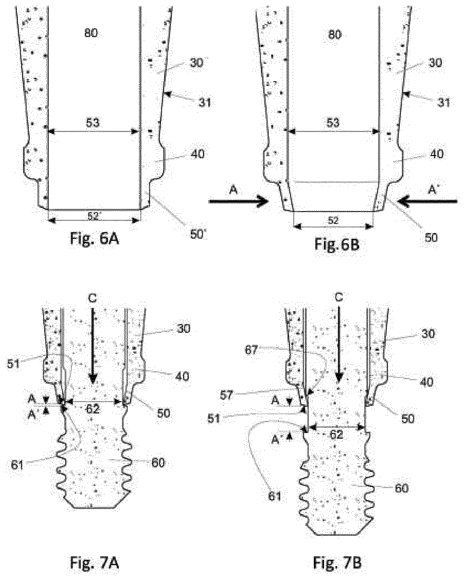

Figures 6A and 6B illustrate part of the production process of the prosthetic component lower edge of the second embodiment of the present invention; and
Figures 7A and 7B illustrate the motion of the retention screw within the limits imposed by the geometry of the prosthetic component lower edge of the second embodiment of the present invention.

### DESCRIPTION

Throughout this description, similar reference signs in the drawings indicate features having similar functions. Moreover, when references are made to, for instance, an interference 'element' or 'geometry', in similar contexts, it must be understood that both refer to the same feature, which can be implemented as an external 'element' associated to the assembly, or a 'geometry' integrated into the body of one of the parts of the assembly.

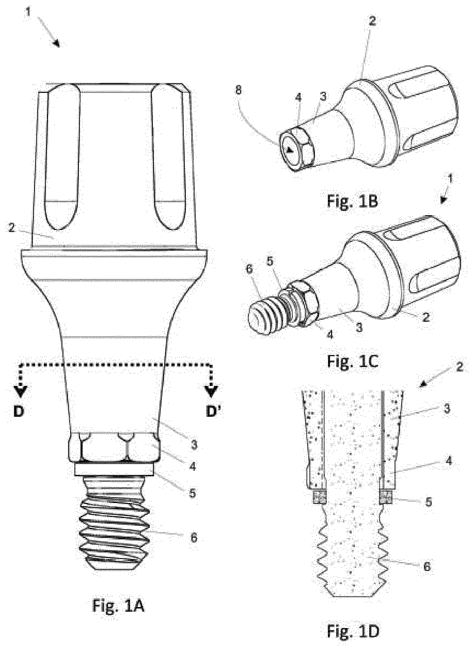

Regarding Figure 1A, the first embodiment of the prosthetic assembly 1, which is the object of the present invention, comprises a prosthetic component 2, having a lower portion 3, an anti-rotation geometry 4, an interference element or geometry 5 and a retention screw 6, inserted into a central hole 8 of the prosthetic component 2. The central hole 8 can be better observed in figure 1B.

The prosthetic component 2 shown is a prosthetic post, but it could likewise be any other type of prosthetic element known in the art, such as: connection, straight abutment, angled abutment, mini conical abutment, UCLAs, analogues, "transfers", straight post and angled post etc. Further, lower portion 3 of the prosthetic element 2 is illustrated in the form of a Morse cone (also known in the art as 'Morse taper'), but it could likewise be any other type of flat or curved surface.

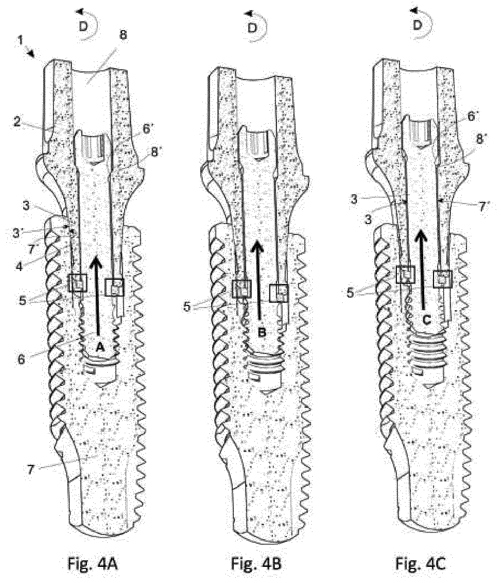

When installed in a dental implant 7 (see Figures 4A-5C), the lower portion 3 of the prosthetic component 2 contacts the corresponding inner wall of the implant 7, forming a uniform seal throughout the periphery of the prosthetic component, in order to increase its resistance to lateral forces. Similarly, the anti-rotational geometry 4 contacts the corresponding geometry within the implant 7, so as to prevent relative movement of rotation between the two components. It should be noted that, although shown in hexagonal form, the anti-rotational geometry 4 may be of any geometry known in the art, capable of preventing relative rotation between the pieces, for example, a triangular or octagonal prism, a cylinder with square keys, or any amorphous geometry.

In use, for example during chewing, the prosthetic assembly 1 is cyclically compressed against the implant 7 where it is installed. With each compression cycle, micro-deformations in the components or even gradual compression on the seal between the lower portion 3 of the prosthetic component 2 and the corresponding inner wall of the implant 7 causes them to adhere to each other, so that a dental health practitioner will have great difficulty in separating them without damaging the components or injuring the patient. To remedy this problem, the prosthetic assembly of the present invention comprises an interference element or geometry 5, which, on the one hand, allows relative rotation between the prosthetic component 2 and the retention screw 6, and, on the other hand, limits the longitudinal motion therebetween so that, when the screw 6 receives a removal torque, the interference element or geometry 5 eventually bumps into the lower edge of the prosthetic component 2, converting and transmitting part of the removal torque which is applied to the screw 6, into a force in the removal direction of the prosthetic component 2.

For better understanding the parts of the prosthetic component 1, Figure 1B shows only the prosthetic component 2 which integrates the prosthetic assembly of the first embodiment of the invention. In turn, Figures 1C and 1D show the complete assembly 1, in perspective and cutaway views from the line DD 'of Figure 1A, respectively.

In this first embodiment, the interference member 5 comprises a ring having an outer diameter greater than the inner diameter of the access hole 8 of the screw 6 within the prosthetic component 2. The ring is installed in a portion of the body of the retention screw 6, the diameter of which is lowered relative to the rest of the screw body, so that said ring is installed and has its movement restricted to the body portion of the lowered diameter screw. Thus, when the screw 6 receives a removal torque, the ring composing the interference member 5 eventually abuts the lower portion of the prosthetic component 2, at which point it transmits part of the removal torque to the component 2, in the form of a force in the direction of component pop-out.

These relation between diameters of the screw body 6 and interference member 5 will be seen in more detail below in the description of the other embodiments of the invention.

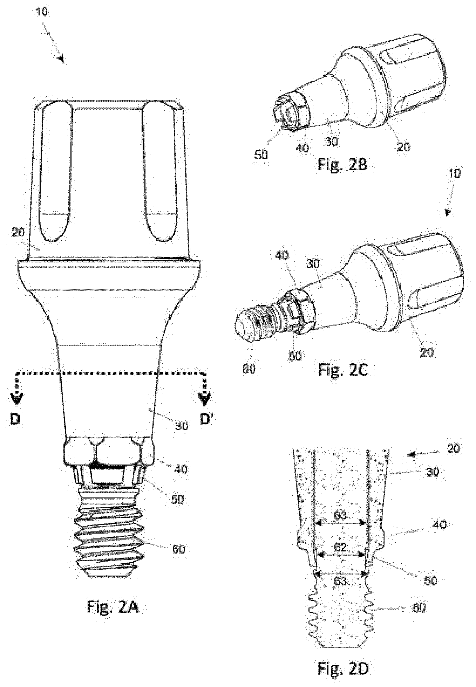

Referring now to Figures 2A to 2D, the interference geometry 50 may form part of the prosthetic element 20, and doesn't need to be a separate element as is the case of the element 5 used in the first embodiment. The prosthetic assembly 10 of this second embodiment of the invention comprises only two parts: the prosthetic component 20 and the retention screw 60. As in the first embodiment, the prosthetic component 20 comprises a lower portion 30 and an anti-rotation geometry 40 which cooperates with corresponding surfaces within the implant. The interference geometry 50 is implemented in the form of one or more flaps of variable size, preferably four diametrically distributed flaps, folded inwardly at the base of the prosthetic component 20. In this case, as in the following embodiments, upon insertion of the screw, the flaps are mechanically folded or deformed inwardly to secure the screw in its portion having a smaller diameter. Said one or more flaps being inwardly folded into the smaller diameter portion 62 of the retention screw body 60, after insertion of said screw into the prosthetic component 20 to form the prosthetic assembly 10. The inner end diameter of the folded flap 52 (see Figure 6B) being compatible with the smaller diameter 62 of the screw body, so as to allow relative rotation between these parts. However, the inner end diameter of the folded flap 52 being smaller than the larger diameter 63 of the screw body 60, so as to limit the relative longitudinal movement between these pieces.

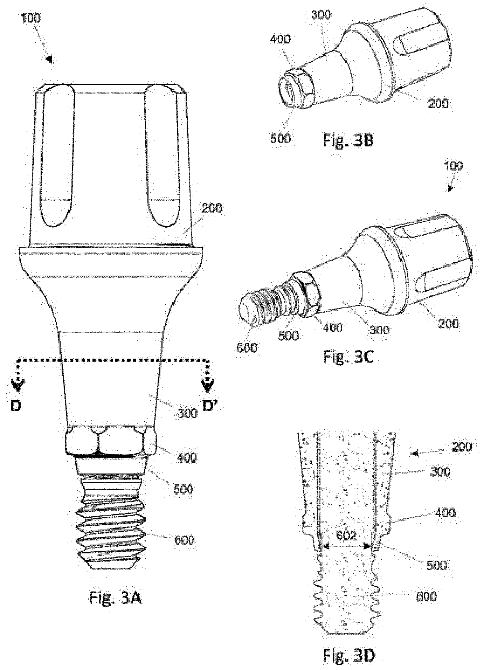

Figures 3A to 3D illustrate a third embodiment of the invention, wherein the interference geometry 500 comprises a tapered and hollow uniform projection of the lower portion of the prosthetic element 200. As in the second embodiment, the prosthetic assembly 100 comprises only two parts: the prosthetic component 200 and the retention screw 600. The prosthetic component 200 comprises a lower portion 300 and an anti-rotation geometry 400 which cooperates with corresponding surfaces within the implant and, additionally, includes the interference geometry 500 in the form of a tapered and hollow uniform projection, which is folded inwardly after insertion of the retention screw 600 in an analogous manner to that of the second embodiment.

Figures 4A to 4C illustrate the gradual motion of the prosthetic assembly 1 of the first embodiment, relative to a dental implant 7 to which it has been attached, when the retention screw 6 is driven in the direction of the arrow D. The arrows A, B and C show the direction of motion of the screw 6 and prosthetic component 2 in the different stages. In stage A (Fig. 4A) the screw 6 is inserted into the implant 7 and the interference element 5 is not driven. In step B (Fig. 4B), when a removal torque is applied to the screw in the direction of the arrow D, the gradual return of the screw causes the interference member 5 to reach the permitted limit of longitudinal motion between screw 6 and prosthetic component 2. From this point, stage C (Fig. 4C), part of the removal torque that is applied to the screw 6 is transmitted to the prosthetic component as a force in the removal direction of the prosthetic component 2.

The cross-sectional view of Figures 4A-4C further illustrates the hole 8 disposed in the prosthetic component 2 for receiving the retention screw 6. The screw 6 has a first support surface 6' arranged to cooperate with the support surface 8' within the prosthetic component to prevent longitudinal motion of the component 2 when the screw 6 is engaged. When the support surface 6' of the screw cooperates with the surface 8' inside the prosthetic component 2 (Fig. 4A), the interference element 5 is within the permitted limit of movement and does not prevent the tightening of the screw. When the bolt is actuated in the removal direction (arrow D), the internal support surfaces of the screw 6' and component 8' move away from each other (Fig. 4B), up to the limit allowed by the interference element 5. At this limit (Fig. 4C), component 2 is forced in the removal direction shown in arrow C.

Inside the implant 7, the surface 3' of the lower portion 3 of the prosthetic component 2 cooperates with the corresponding surface 7' of the inner cavity of the implant. When the screw 6 is attached (Fig. 4A), the surface 3' of the lower portion 3 cooperates with the surface 7' of the implant cavity in order to seal the space therebetween. When the screw is driven in the removal direction (arrow D), the surface 3' of the lower portion 3 initially remains attached to the surface 7' of the implant cavity (Fig. 4B). In a second moment (Fig. 4C), the force acting in the removal direction of the prosthetic component 2 by the interference element 5 leads to the spacing between the two surfaces (the surface 3' of the lower portion 3 and the surface 7' of the implant cavity) without the need for any extra intervention by the dental health practitioner removing the component.

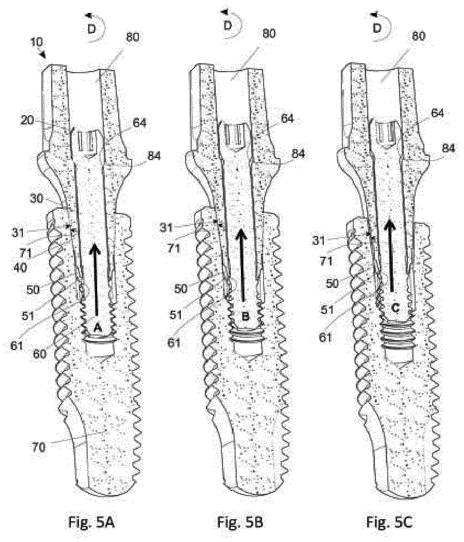

Similarly, Figures 5A, 5B and 5C illustrate the gradual motion of the prosthetic assembly of the second embodiment, relative to a dental implant to which it has been attached, when the retention screw is driven in the direction of the arrow D. In this second embodiment, it has an interference geometry 50 integral with the prosthetic component 20.

In an analogous manner to that of the description of Figures 4A to 4C, Figures 5A to 5C illustrate the gradual motion of the prosthetic assembly 10 relative to a dental implant 70 to which it has been attached, when the retention screw 60 is driven in the direction of arrow D. Arrows A, B and C show the motion direction of the screw 60 and prosthetic component 20 at different stages. In stage A (Fig. 5A) the screw 60 is inserted into the implant 70 and the interference member 50 is not driven. In stage B (Fig. 5B), when a removal torque is applied to the screw in the direction of the arrow D, the gradual return of the screw causes the interference member 50 to reach the permitted limit of longitudinal motion between screw 60 and prosthetic component 20. This limit occurs when the surface 61 of the smaller diameter portion 62 of the body of the retention screw 60 abuts the lower surface 51 of the interference member 50. From this point, stage C (Fig. 5C), part of the torque which is applied to the screw 60, is transmitted to the prosthetic component 20 as a force in the pop-out direction of the prosthetic component.

The cross-sectional views of Figures 5A-5C also illustrate the hole 80 disposed in the prosthetic component 20 for receiving the retention screw 60. The screw 60 has a first support surface 64 arranged to cooperate with the corresponding support surface 84 within the prosthetic component in order to prevent longitudinal motion of the component 20 when the screw 60 is secured. When the support surface 64 of the screw cooperates with the surface 84 within the prosthetic component 20 (Fig. 5A), the interference member 50 is within the permitted limit of movement and does not prevent the tightening of the screw. When the screw is driven in the removal direction (arrow D), the screw internal support surfaces 64 and component 84 move away from each other (Fig. 5B), up to the limit allowed by the interference member 50. At this limit (Fig. 5C) the component 20 is forced in the removal direction indicated by arrow C.

Inside the implant 70, the surface 31 of the lower portion 30 of the prosthetic component 20 cooperates with the corresponding surface 71 of the internal cavity of the implant. When the screw 60 is secured (Fig. 5A), the surface 31 of the lower portion 30 cooperates with the surface 71 of the implant cavity in order to seal the space therebetween. When the screw is driven in the removal direction (arrow D), initially (Fig. 5B) the surface 31 of the lower portion 30 remains secured to the surface 71 of the implant cavity. Subsequently (Fig. 5C), the force acting in the pop-out direction of the prosthetic component 20 by the interference member 50 leads to the spacing between the two surfaces (the surface 31 of the lower portion 30 and the surface 71 of the implant cavity) without the need for any extra intervention by the dental health practitioner removing the component.

The method of producing the different embodiments of the prosthetic assembly 1, 10, 100 proposed above comprises the following steps: (a) forming a prosthetic component 2, 20, 200 having a central hole 8, 80 for receiving the retention screw 6, 60, 600; (b) forming a retention screw 6, 60, 600, the body of which has a portion having a smaller diameter 62, 602; (c) inserting said retention screw 6, 60, 600 into said central hole 8, 80 of the prosthetic component 2, 20, 200; and (d) forming an interference geometry 5, 50, 500 between the base of the prosthetic component 2, 20, 200 and the body of the retention screw 6, 60, 600, which allows relative rotation, limits the relative longitudinal motion, and inseparably joins said prosthetic component 2, 20, 200 to said retention screw 6, 60, 600.

The production of the different embodiments of the invention differs from each other in the step (d) of forming interference element 5 or interference geometry 50, 500. In producing a prosthetic assembly 1 according to the first embodiment of the invention, step (d) of forming an interference geometry 5 comprises attaching a ring to the portion having a smaller diameter of the screw body 6.

Regarding the production of a prosthetic assembly 10 according to the second embodiment of the invention, step (d) of forming an interference geometry 50 comprises inwardly folding one or more integrated flaps to, and distributed in the base of, the prosthetic component 20, said one or more flaps inwardly folded in, and so as to cooperate with, the portion having a smaller diameter 62 of the body of the retention screw 60.

When producing a prosthetic assembly 100 according to the third embodiment of the invention, step (d) of forming an interference geometry 500 comprises inwardly folding a hollow projection of the lower portion of the prosthetic element 200, thereby forming a tapered element that cooperates with the portion having a smaller diameter 602 of the body of the retention screw 600.

Figures 6A and 6B illustrate part of the lower edge manufacturing process of the prosthetic component of the second embodiment of the present invention. Initially, the inside diameter 53 of the hole 80 is equal to the mouth diameter 52' of the lower end 50' of the prosthetic component 20 prior to the formation of the interference member 50. In a second moment, a force in the direction of the arrows AA' diametrically into the hole 80 compresses the diameter of the mouth 52 of the hole 80 forming the interference member 50.

Figures 7A and 7B illustrate the motion of the retention screw 60 within the limits imposed by the geometry of the lower edge of the prosthetic component after formation of the interference member 50, when the screw moves in the direction indicated by the arrow C. Screw 60 is free to move between a minimum (indicated by line AA' in Figure 7A) and maximum distance (indicated by line AA' in Figure 7B). The minimum point being defined by the encounter of the surface 61 of the smaller diameter portion 62 of the body of the retention screw 60 with the lower surface 51 of the interference member 50. The maximum point being defined by the encounter of the opposing surface 67 of the smaller diameter portion 62 of the body of the retention screw 60 with the inner surface 57 of the interference member 50.

Although the invention has been described in terms of the preferred embodiments, it is clear that other forms could be adopted by those skilled in the art to obtain similar results. The scope of the invention is therefore limited only by the following claims.

## Claims

1. Prosthetic assembly (1, 10, 100), comprising a prosthetic component (2, 20, 200) and a retention screw (6, 60, 600), the prosthetic assembly being able to cooperate with a dental implant (7, 70) and designed to aid in removal of a prosthesis after used by a subject; and comprising an interference geometry (5, 50, 500) designed to allow relative rotation, limit relative longitudinal motion, and inseparably join the prosthetic component (2, 20, 200) and said retention screw (6, 60, 600), wherein the interference geometry (5, 50, 500) comprises a lower surface (51) and cooperates with a portion having a smaller diameter (62, 602) of the body of the retention screw (6, 60, 600), wherein the portion having a smaller diameter (62, 602) of the body of the retention screw (600) comprises a surface (61) which abuts the lower surface (51) of the interference member (5, 50, 500) when a removal torque is applied to the screw (6, 60, 600).

2. Prosthetic assembly (1), according to claim 1, **characterized in that** the interference geometry (5) comprises a ring attached to the retention screw (6) in a portion of the body of said screw (6) having a smaller diameter.

3. Prosthetic assembly (10), according to claim 1, **characterized in that** the interference geometry (50) comprises one or more flaps integrated to the prosthetic component (20) and diametrically distributed around the base thereof, said one or more flaps being inwardly folded in, and so as to cooperate with, the portion having a smaller diameter (62) of the body of the retention screw (60).

4. Prosthetic assembly (100), according to claim 1, **characterized in that** the interference geometry (500) comprises a uniform, tapered and hollow projection of the lower portion of the prosthetic component (200), said projection being inwardly folded in, and so as to cooperate with, the portion having a smaller diameter (602) of the body of the retention screw (600).

5. Prosthetic assembly (1, 10, 100), according to any one of claims 1 a 4, **characterized in that** the prosthetic component (2, 20, 200) is of a type selected from a list including: connection, straight abutment, angled abutment, mini conical abutment, UCLAs, analogues, "transfers", straight post and angled post.

6. Prosthetic assembly (1, 10, 100), according to any one of claims 1 to 5, **characterized in that** the prosthetic component (2, 20, 200) comprises a lower portion (3, 30, 300) in the form of a Morse cone.

7. Prosthetic assembly (1, 10, 100), according to any one of claims 1 to 6, **characterized in that** the prosthetic component (2, 20, 200) comprises an anti-rotation geometry (4, 40, 400) in the form of a hexagonal prism.

8. Prosthetic assembly (1, 10, 100), according to any one of claims 1 to 6, **characterized in that** the prosthetic component (2, 20, 200) comprises an anti-rotation geometry (4, 40, 400) in the form of an octagonal prism.

9. Process for producing a prosthetic assembly (1, 10, 100) designed to aid in removal of a prosthesis after used by a subject as claimed in claim 1, the process comprising the following steps:
a) Forming a prosthetic component (2, 20, 200) having a central hole (8, 80) for receiving the retention screw (6, 60, 600);
b) Forming a retention screw (6, 60, 600), the body of which has a portion having a smaller diameter (62, 602);
c) Inserting said retention screw (6, 60, 600) into the central hole (8, 80) of the prosthetic component (2, 20, 200); and
d) Forming an interference geometry (5, 50, 500) between the base of the prosthetic component (2, 20, 200) and the body of the retention screw (6, 60, 600), which allows relative rotation, limits relative longitudinal motion, and inseparably joins said prosthetic component (2, 20, 200) to said retention screw (6, 60, 600), wherein the interference geometry (5, 50, 500) comprises a lower surface (51) and cooperates with a portion having a smaller diameter (62, 602) of the body of the retention screw (6, 60, 600), wherein the portion having a smaller diameter (62, 602) of the body of the retention screw (600) comprises a surface (61) which abuts the lower surface (51) of the interference member (5, 50, 500) when a removal torque is applied to the screw (6, 60, 600).

10. Process for producing a prosthetic assembly (1), according to claim 9, **characterized in that** step (d) of forming an interference geometry (5) comprises attaching a ring to said portion having a smaller diameter of the body of the screw (6).

11. Process for producing a prosthetic assembly (10), according to claim 9, **characterized in that** step (d) of forming an interference geometry (50) comprises inwardly folding one or more integrated flaps to, and distributed in the base of, the prosthetic component (20), said one or more flaps inwardly folded in, and so as to cooperate with, the portion having a smaller diameter (62) of the body of the retention screw (60).

12. Process for producing a prosthetic assembly (100), according to claim 9, **characterized in that** step (d) of forming an interference geometry (500) comprises inwardly folding a hollow projection of the lower portion of the prosthetic component (200), thereby forming a tapered element that cooperates with the portion having a smaller diameter (602) of the body of the retention screw (600).

## Patentansprüche

1. Prothesenmontage (1, 10, 100), umfassend einen Prothesenbestandteil (2, 20, 200) und eine Halteschraube (6, 60, 600), wobei die Prothesenmontage in der Lage ist, mit einem Dentalimplantat (7, 70) zusammenzuwirken und ausgelegt ist, bei Entfernung einer Prothese zu helfen, nachdem sie von einer Person verwendet wurde; und umfassend eine Eingriffsgeometrie (5, 50, 500), ausgelegt, um relative Rotation zu ermöglichen, relative längsgerichtete Bewegung zu begrenzen und den Prothesenbestandteil (2, 20, 200) und die Halteschraube (6, 60, 600) untrennbar zu verbinden, wobei die Eingriffsgeometrie (5, 50, 500) eine unter Oberfläche (51) umfasst und mit einem Abschnitt zusammenwirkt, der einen kleineren Durchmesser (62, 602) des Körpers der Halteschraube (6, 60, 600) aufweist, wobei der Abschnitt, der einen kleineren Durchmesser (62, 602) des Körpers der Halteschraube (600) aufweist, eine Oberfläche (61) umfasst, die an der unteren Oberfläche (51) der Eingriffsgeometrie (5, 50, 500) anliegt, wenn ein Ausdrehmoment auf die Schraube (6, 60, 600) angewendet wird.

2. Prothesenmontage (1) nach Anspruch 1, **dadurch gekennzeichnet, dass** die Eingriffsgeometrie (5) einen Ring umfasst, der an der Halteschraube (6) in einem Abschnitt des Körpers der Schraube (6) befestigt ist, der einen kleineren Durchmesser aufweist.

3. Prothesenmontage (10) nach Anspruch 1, **dadurch gekennzeichnet, dass** die Eingriffsgeometrie (50) eine oder mehrere Klappen in den Prothesenbestandteil (20) integriert und diametral um die Basis davon herum verteilt umfasst, wobei die eine oder mehreren Klappen nach innen und so, um mit dem Abschnitt, der einen kleineren Durchmesser (62) des Körpers der Halteschraube (60) aufweist, zusammenzuwirken, eingefaltet sind.

4. Prothesenmontage (100) nach Anspruch 1, **dadurch gekennzeichnet, dass** die Eingriffsgeometrie (500) einen gleichförmigen, sich verjüngenden und hohlen Vorsprung des unteren Abschnitts des Prothesenbestandteils (200) umfasst, wobei der Vorsprung nach innen und so, um mit dem Abschnitt, der einen kleineren Durchmesser (602) des Körpers der Halteschraube (600) aufweist, zusammenzuwirken, eingefaltet ist.

5. Prothesenmontage (1, 10, 100) nach einem der Ansprüche 1 ein 4, **dadurch gekennzeichnet, dass** der Prothesenbestandteil (2, 20, 200) von einer Art ist, ausgewählt aus einer Liste, beinhaltend: Verbindungsstück, gerades Abutment, abgewinkeltes Abutment, konisches Mini-Abutment, UCLAs, Analoge, "Transfers", geraden Pfosten und abgewinkelten Pfosten.

6. Prothesenmontage (1, 10, 100) nach einem der Ansprüche 1 bis 5, **dadurch gekennzeichnet, dass** der Prothesenbestandteil (2, 20, 200) einen unteren Abschnitt (3, 30, 300) in Form eines Morsekonus umfasst.

7. Prothesenmontage (1, 10, 100) nach einem der Ansprüche 1 bis 6, **dadurch gekennzeichnet, dass** der Prothesenbestandteil (2, 20, 200) eine Rotationsschutzgeometrie (4, 40, 400) in Form eines hexagonalen Prismas umfasst.

8. Prothesenmontage (1, 10, 100) nach einem der Ansprüche 1 bis 6, **dadurch gekennzeichnet, dass** der Prothesenbestandteil (2, 20, 200) eine Rotationsschutzgeometrie (4, 40, 400) in Form eines oktagonalen Prismas umfasst.

9. Verfahren zum Herstellen einer Prothesenmontage (1, 10, 100), ausgelegt, um bei Entfernung einer Prothese zu helfen, nachdem sie von einer Person wie in Anspruch 1 beansprucht verwendet wurde, wobei das Verfahren die folgenden Schritte umfasst:
a) Bilden eines Prothesenbestandteils (2, 20, 200) mit einem zentralen Loch (8, 80) zum Aufnehmen der Halteschraube (6, 60, 600);
b) Bilden einer Halteschraube (6, 60, 600), von der der Körper einen Abschnitt aufweist, der einen kleineren Durchmesser (62, 602) aufweist;
c) Einsetzen der Halteschraube (6, 60, 600) in das zentrale Loch (8, 80) des Prothesenbestandteils (2, 20, 200); und
d) Bilden einer Eingriffsgeometrie (5, 50, 500) zwischen der Basis des Prothesenbestandteils (2, 20, 200) und dem Körper der Halteschraube (6, 60, 600), die relative Rotation ermöglicht, relative längsgerichtete Bewegung begrenzt und den Prothesenbestandteil (2, 20, 200) untrennbar mit der Halteschraube (6, 60, 600) verbindet, wobei die Eingriffsgeometrie (5, 50, 500) eine unter Oberfläche (51) umfasst und mit einem Abschnitt zusammenwirkt, der einen kleineren Durchmesser (62, 602) des Körpers der Halteschraube (6, 60, 600) aufweist, wobei der Abschnitt, der einen kleineren Durchmesser (62, 602) des Körpers der Halteschraube (600) aufweist, eine Oberfläche (61) umfasst, die an der unteren Oberfläche (51) der Eingriffsgeometrie (5, 50, 500) anliegt, wenn ein Ausdrehmoment auf die Schraube (6, 60, 600) angewendet wird.

10. Verfahren zum Herstellen einer Prothesenmontage (1) nach Anspruch 9, **dadurch gekennzeichnet, dass** Schritt (d) des Bildens einer Eingriffsgeometrie (5) das Befestigen eines Rings an den Abschnitt mit einem kleineren Durchmesser des Körpers der Schraube (6) umfasst.

11. Verfahren zum Herstellen einer Prothesenmontage (10) nach Anspruch 9, **dadurch gekennzeichnet, dass** der Schritt (d) des Bildens einer Eingriffsgeometrie (50) das Falten nach innen einer oder mehrere integrierten Klappen zu, und verteilt in der Basis von, dem Prothesenbestandteil (20), wobei die eine oder mehreren Klappen nach innen, und so, um mit dem Abschnitt, der einen kleineren Durchmesser (62) des Körpers der Halteschraube (60) aufweist, zusammenzuwirken, eingefaltet werden, umfasst.

12. Verfahren zum Herstellen einer Prothesenmontage (100) nach Anspruch 9, **dadurch gekennzeichnet, dass** Schritt (d) des Bildens einer Eingriffsgeometrie (500) das Falten nach innen eines hohlen Vorsprungs des unteren Abschnitts des Prothesenbestandteils (200) umfasst, wodurch ein sich verjüngendes Element gebildet wird, das mit dem Abschnitt mit einem kleineren Durchmesser (602) des Körpers der Halteschraube (600) zusammenwirkt.

## Revendications

1. Ensemble prothétique (1, 10, 100), comprenant un composant prothétique (2, 20, 200) et une vis de retenue (6, 60, 600), l'ensemble prothétique étant apte à coopérer avec un implant dentaire (7, 70) et conçu pour aider au retrait d'une prothèse après son utilisation par un sujet ; et comprenant une géométrie d'interférence (5, 50, 500) conçue pour permettre une rotation relative, limiter un déplacement longitudinal relatif, et rendre indissociables le composant prothétique (2, 20, 200) et ladite vis de retenue (6, 60, 600), dans lequel la géométrie d'interférence (5, 50, 500) comprend une surface inférieure (51) et coopère avec une partie de moindre diamètre (62, 602) du corps de la vis de retenue (6, 60, 600), dans lequel la partie de moindre diamètre (62, 602) du corps de la vis de retenue (600) comprend une surface (61) qui bute contre la surface inférieure (51) de l'élément d'interférence (5, 50, 500) lorsqu'un couple de retrait est appliqué à la vis (6, 60, 600).

2. Ensemble prothétique (1), selon la revendication 1, **caractérisé en ce que** la géométrie d'interférence (5) comprend un anneau fixé à la vis de retenue (6) dans une partie du corps de ladite vis (6) de moindre diamètre.

3. Ensemble prothétique (10), selon la revendication 1, **caractérisé en ce que** la géométrie d'interférence (50) comprend une ou plusieurs ailettes intégrées dans le composant prothétique (20) et distribuées diamétralement autour de sa base, lesdites une ou plusieurs ailettes étant repliées vers l'intérieur dans, et de manière à coopérer avec, la partie de moindre diamètre (62) du corps de la vis de retenue (60).

4. Ensemble prothétique (100), selon la revendication 1, **caractérisé en ce que** la géométrie d'interférence (500) comprend une saillie uniforme, tronconique et creuse de la partie inférieure de l'élément prothétique (200), ladite saillie étant repliée vers l'intérieur dans, et de manière à coopérer avec, la partie de moindre diamètre (602) du corps de la vis de retenue (600).

5. Ensemble prothétique (1, 10, 100), selon l'une quelconque des revendications 1 un 4, **caractérisé en ce que** le composant prothétique (2, 20, 200) est d'un type sélectionné parmi une liste comprenant : un raccord, une butée droite, une butée angulaire, une mini-butée conique, des UCLA, des équivalents, des « transferts », un tenon droit et un tenon angulaire.

6. Ensemble prothétique (1, 10, 100), selon l'une quelconque des revendications 1 à 5, **caractérisé en ce que** le composant prothétique (2, 20, 200) comprend une partie inférieure (3, 30, 300) sous la forme d'un cône Morse.

7. Ensemble prothétique (1, 10, 100), selon l'une quelconque des revendications 1 à 6, **caractérisé en ce que** le composant prothétique (2, 20, 200) comprend une géométrie anti-rotation (4, 40, 400) sous la forme d'un prisme hexagonal.

8. Ensemble prothétique (1, 10, 100), selon l'une quelconque des revendications 1 à 6, **caractérisé en ce que** le composant prothétique (2, 20, 200) comprend une géométrie anti-rotation (4, 40, 400) sous la forme d'un prisme octogonal.

9. Procédé de production d'un ensemble prothétique (1, 10, 100) conçu pour aider au retrait d'une prothèse après son utilisation par un sujet selon la revendication 1, le procédé comprenant les étapes suivantes :
a) la formation d'un composant prothétique (2, 20, 200) présentant un trou central (8, 80) pour recevoir la vis de retenue (6, 60, 600) ;
b) la formation d'une vis de retenue (6, 60, 600), dont le corps présente une partie de moindre diamètre (62, 602) ;
c) l'insertion de ladite vis de retenue (6, 60, 600) dans le trou central (8, 80) du composant prothétique (2, 20, 200) ; et
d) la formation d'une géométrie d'interférence (5, 50, 500) entre la base du composant prothétique (2, 20, 200) et le corps de la vis de retenue (6, 60, 600), ce qui permet une rotation relative, limite un mouvement longitudinal, et rend indissociables ledit composant prothétique (2, 20, 200) et ladite vis de retenue (6, 60, 600), dans lequel la géométrie d'interférence (5, 50, 500) comprend une surface inférieure (51) et coopère avec une partie de moindre diamètre (62, 602) du corps de la vis de retenue (6, 60, 600), dans lequel la partie de moindre diamètre (62, 602) du corps de la vis de retenue (600) comprend une surface (61) qui bute contre la surface inférieure (51) de l'élément d'interférence (5, 50, 500) lorsqu'un couple de retrait est appliqué à la vis (6, 60, 600).

10. Procédé de production d'un ensemble prothétique (1), selon la revendication 9, **caractérisé en ce que** l'étape (d) de formation d'une géométrie d'interférence (5) comprend la fixation d'un anneau à ladite partie de moindre diamètre du corps de la vis (6).

11. Procédé de production d'un ensemble prothétique (10), selon la revendication 9, **caractérisé en ce que** l'étape (d) de formation d'une géométrie d'interférence (50) comprend le repliage vers l'intérieur d'une ou plusieurs ailettes intégrées au, et distribuées dans la base du, composant prothétique (20), lesdites une ou plusieurs ailettes repliées vers l'intérieur dans, et de manière à coopérer avec, la partie de moindre diamètre (62) du corps de la vis de retenue (60).

12. Procédé de production d'un ensemble prothétique (100), selon la revendication 9, **caractérisé en ce que** l'étape (d) de formation d'une géométrie d'interférence (500) comprend le repliage vers l'intérieur d'une projection creuse de la partie inférieure du composant prothétique (200), formant ainsi un élément conique qui coopère avec la partie de moindre diamètre (602) du corps de la vis de rétention (600).
